# EUROPÄISCHE PATENTANMELDUNG

(11) **EP 0 877 253 A1**
(43) Veröffentlichungstag der Anmeldung: **11.11.1998**
(21) Anmeldenummer: 98108111.0
(22) Anmeldetag: 04.05.1998
(51) Int. Cl.: G01P 3/68, G08G 1/052, G08G 1/054

(54) **Optische Geschwindigkeitsmesseinrichtung**

(30) Priorität: 07.05.1997 DE 19719499
(71) Anmelder: Münz, Erwin, D-88069 Tettnang (DE)
(72) Erfinder: Rauch, Lorenz, Ing. grad., 88074 Meckenbeuren (DE)
(74) Vertreter: Engelhardt, Guido, Dipl.-Ing.

(57) **Zusammenfassung**

Bei einer Einrichtung (11) zur Ermittlung der Fahrgeschwindigkeit eines Straßenfahrzeuges (3) mittels optischer Signale sind am Rand (2) einer Fahrstraße (1) zwei oder mehrere optische Sensoren (14, 15, 16) parallel zum Fahrbahnbelag und mit seitlichem Abstand zueinander angeordnet, die als Mehrquadrantensensoren zur Aufnahme von von dem Straßenfahrzeug (3) reflektierten Lichtstrahlen (17, 18, 19) ausgebildet sind. Die optischen Sensoren (14, 15, 16) sind jeweils über einen Analog/Digitalwandler (21, 22, 23) an einen Rechner (20) angeschlossen, in dem die zeitlich versetzt aufgenommenen Lichtsignalmuster (24, 25, 26) auswertbar sind.

Mit der Einrichtung (11) ist es möglich, von nur einer Seite einer Fahrstraße (1) aus die Geschwindigkeit des Straßenfahrzeuges (3) exakt zu bestimmen, in dem die erfaßten Lichtsignalmuster (24, 25, 26) abgeglichen werden und aus deren zeitlichen Versatz in dem Rechner die Fahrgeschwindigkeit des Straßenfahrzeuges (3) ermittelt wird. Beim Auf- und Abbau der nur auf einer Seite der Fahrstraße (1) angeordneten Einrichtung (11) muß somit die Fahrstraße (1) nicht mehr überquert werden, so daß das Unfallrisiko für das Bedienungspersonal minimiert ist.

## Beschreibung

Die Erfindung bezieht sich auf eine Einrichtung sowie ein Verfahren zur Ermittlung der Fahrgeschwindigkeit eines Straßenfahrzeuges mittels optischer Signale.

Geschwindigkeitsmesseinrichtungen dieser Art sind in zahlreichen unterschiedlichen Ausgestaltungen bekannt. Mittels zweier oder mehrerer Lichtschranken, deren Sender und Empfänger auf beiden Seiten der Fahrstraße anzuordnen sind, wird hierbei beim Duchfahren der Lichtstrahlen eine Zeitmessung vorgenommen und daraus wird die Geschwindigkeit des Fahrzeuges, da der Abstand der Lichtschranken zueinander festgelegt ist, errechnet.

Diese Einrichtungen haben sich in der Praxis vielfach zwar bewährt, deren Bauaufwand ist jedoch erheblich. Vor allem aber ist bei diesen Einrichtungen von Nachteil, daß die Lichtstrahlensender und die die Lichtstrahlen aufnehmenden Empfänger auf beiden Seiten einer Fahrstraße aufgestellt werden müssen. Der Auf- und Abbau der Sender und Empfänger ist daher mit einem erheblichen Unfallrisiko für das Bedienungspersonal verbunden, da dieses mitunter mehrfach die Fahrstraße zu überqueren hat und dabei die Gefahr besteht, angefahren und verletzt zu werden. Vor und nach der Durchführung von Geschwindigkeitsmessungen mittels der bekannten Einrichtungen ist somit eine erhebliche Unfallgefahr gegeben.

Aufgabe der Erfindung ist es demnach, eine Einrichtung zur Ermittlung der Fahrgeschwindigkeit eines Straßenfahrzeuges mittels optischer Signale zu schaffen, die nicht nur einfach in ihrer konstruktiven Ausgestaltung ist und somit wirtschaftlich gefertigt werden kann, sondern die auch derart ausgestaltet ist, daß beim Auf- und Abbau der Einrichtung eine Fahrstraße nicht mehr überquert werden muß, so daß das Unfallrisiko für das Bedienungspersonal bei der Durchführung von Geschwindigkeitsmessungen durch Straßenfahrzeuge minimiert wird. Des weiteren soll die Einrichtung bei einfacher Handhabung in kurzer Zeit aufzustellen und betriebsbereit sein, auch sollen, ohne daß die Einrichtung von dritter Seite zu orten ist, eine hohe Meßgenauigkeit sowie eine zufriedenstellende Meßrate zu erzielen sein.

Gemäß der Erfindung wird dies mit einer Einrichtung zur Ermittlung der Fahrgeschwindigkeit eines Straßenfahrzeuges mittels optischer Signale dadurch erreicht, daß am Rand einer Fahrstraße zwei oder mehrere optische Sensoren etwa parallel zu dem Fahrbahnbelag und mit seitlichem Abstand zueinander angeordnet sind, daß die optischen Sensoren als Mehrquadrantensensoren in Form von Fotodioden zur Aufnahme von von dem Straßenfahrzeug reflektierten Lichtstrahlen ausgebildet sind, und daß die optischen Sensoren jeweils über einen Analog/Digitalwandler an einen Rechner angeschlossen sind, in dem die von den optischen Sensoren zeitlich versetzt aufgenommenen Lichtsignalmuster auswertbar sind.

Zweckmäßig ist es hierbei, die optischen Sensoren zur Differenzbildung der Helligkeitssignale jeweils mit zwei unmittelbar nebeneinander oder vier im Kreis angeordneten lichtempfindlichen Dioden zu versehen, so daß die Lichtsignalmuster verstärkt wiedergegeben werden, und den Analog/Digitalwandlern eine Triggerschaltung zuzuordnen, mittels der die Einrichtung zu starten ist.

Um auch Geschwindigkeitsmessungen bei Dunkelheit durchführen zu können, sollte den optischen Sensoren mindestens eine Lichtquelle, vorzugsweise eine Infrarotlampe, zugeordnet sein, die an eine gemeinsame Steuereinheit angeschlossen sind.

Die optischen Sensoren sollten gemeinsam in einem ausrichtbaren Gehäuse angeordnet sein, auch sollte, um Fehlmessungen auszuschließen, zur Erfassung der von dem Straßenfahrzeug reflektierten Lichtstrahlen drei optische Sensoren vorgesehen sein, die mit gleichem seitlichem Abstand zueinander in dem Gehäuse angeordnet sind. Außerdem kann der Einrichtung eine Fotoeinheit zugeordnet werden.

Ferner soll ein Verfahren zur Ermittlung der Fahrgeschwindigkeit eines Straßenfahrzeuges mittels optischer Signale verwirklicht werden, mittels dem es möglich ist, von nur einer Seite einer Fahrstraße aus die Geschwindigkeit eines Fahrzeuges exakt zu bestimmen. Dieses Verfahren ist dadurch gekennzeichnet, daß mittels zweier oder mehrerer, vorzugsweise dreier, am Rand einer Fahrstraße angeordneter optischer Sensoren von dem Straßenfahrzeug auf etwa gleichem Niveau reflektierte natürliche oder künstliche Lichtstrahlen in Form von Lichtsignalmustern aufgenommen werden, daß die Lichtsignalmuster über jeweils einen Analog/Digitalwandler einem Rechner zugeleitet und in diesem auf Kongruenz abgeglichen werden und daß aus dem zeitlichen Versatz der Lichtsignalmuster zueinander in dem Rechner die Fahrgeschwindigkeit des Straßenfahrzeuges ermittelt wird.

Vorteilhaft ist es hierbei, die Helligkeitsunterschiede der von einem Straßenfahrzeug reflektierten Lichtstrahlen von den optischen Sensoren zu detektieren und die Einrichtung mittels einer den Analog/Digitalwandlern zugeordneter Triggerschaltung zu starten. Des weiteren können die Lichtsignalmuster mit vorgegebenen Auswertkriterien verglichen werden, um Fehlmessungen zu eliminieren.

Wird eine Einrichtung zur Ermittlung der Fahrgeschwindigkeit eines Straßenfahrzeuges mittels optischer Signale gemäß der Erfindung ausgebildet bzw. erfolgt eine Geschwindigkeitsmessung nach dem erfindungsgemäßen Verfahren, so ist es auf äußerst einfache Weise und ohne großen Bauaufwand möglich, die Fahrgeschwindigkeit eines Straßenfahrzeuges von nur einer Seite der Fahrstraße aus zu bestimmen. Die von dem Fahrzeug reflektierten natürlichen oder künstlichen Lichtstrahlen werden nämlich von den optischen Sensoren in Form von Lichtsignalmustern aufgenommen und miteinander verglichen, so daß aus dem zeitlichen Versatz der gegebenenfalls detektierten Lichtstrahlenmuster die Geschwindigkeit des Fahrzeuges zu ermitteln ist.

Der dazu erforderliche Bauaufwand ist sehr gering, da lediglich in einen Randbereich einer Fahrstraße optische Sensoren aufzustellen sind. Die Fahrstraße muß demnach von dem Bedienungspersonal der Einrichtung nicht mitunter mehrfach überquert werden, um diese auf- und abzubauen, so daß die Gefahr, dabei von einem Straßenfahrzeug angefahren und verletzt zu werden, sehr gering ist. Des weiteren sind stets exakte Messungen durchzuführen. Auch ist eine hohe Meßsicherheit gegeben und die vorschlagsgemäß ausgebildete Einrichtung kann, da diese die von einem Fahrzeug reflektierten Lichtstrahlen nutzt und demnach bei Geschwindigkeitsmessungen keine elektromagnetischen Felder entstehen, nicht geortet werden. Bei einfacher Handhabung, insbesondere bei kurzfristiger Montage und Demontage der Einrichtung, ist demnach ein vielseitiger und vorteilhafter Einsatz gegeben.

In der Zeichnung ist ein Ausführungsbeispiel der gemäß der Erfindung ausgebildeten Einrichtung zur Ermittlung der Fahrgeschwindigkeit eines Straßenfahrzeuges mittels optischer Signale schematisch dargestellt, das nachfolgend im einzelnen erläutert ist. Hierbei zeigt:
- Figur 1: die Anordnung der Einrichtung bei einem Meßvorgang, in Vorderansicht,
- Figur 2: die Anordnung der Einrichtung nach Figur 1, in Draufsicht und verkleinerter Wiedergabe,
- Figur 3: ein Blockschaltbild der Einrichtung nach den Figuren 1 und 2 und
- Figur 4: die von der Einrichtung nach den Figuren 1 und 2 aufgenommenen Lichtsignalmuster.

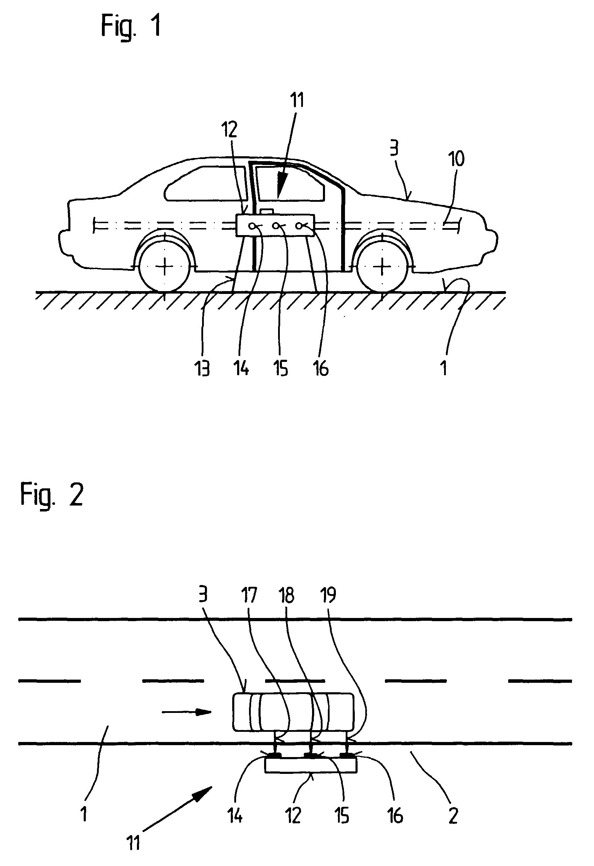

Die in den Figuren 1 und 2 dargestellte und jeweils mitt 11 bezeichnete Einrichtung dient zur Bestimmung der Fahrgeschwindigkeit eines auf einer Fahrstraße 1 befindlichen Fahrzeuges 3 und besteht im wesentlichen aus drei in einem in einem Randbereich 2 der Fahrstraße 1 und somit nur auf einer Straßenseite angeordneten Gehäuse 12 eingebaute optische Sensoren 14, 15 und 16, die von dem Fahrzeug 3 reflektierte Lichtstrahlen 17, 18 und 19 aufnehmen. Die auf gleicher Höhe und demnach parallel zu dem Fahrbahnbelag der Fahrstraße 1 in dem Gehäuse 12 eingebauten optischen Sensoren 14, 15 und 16 nehmen dabei die beim Vorbeifahren von der in Figur 1 strichpunktiert eingezeichneten Meßstrecke 10 reflektierten Lichtstrahlen 14, 15 und 16 auf. Um das Gehäuse 12 leicht parallel zu dem Fahrbahnbelag der Fahrstraße 1 ausrichten zu können, ist dieses mit höhenverstellbaren Standfüßen 13 und gegebenenfalls einem Gelenk zur Nivellierung ausgestattet.

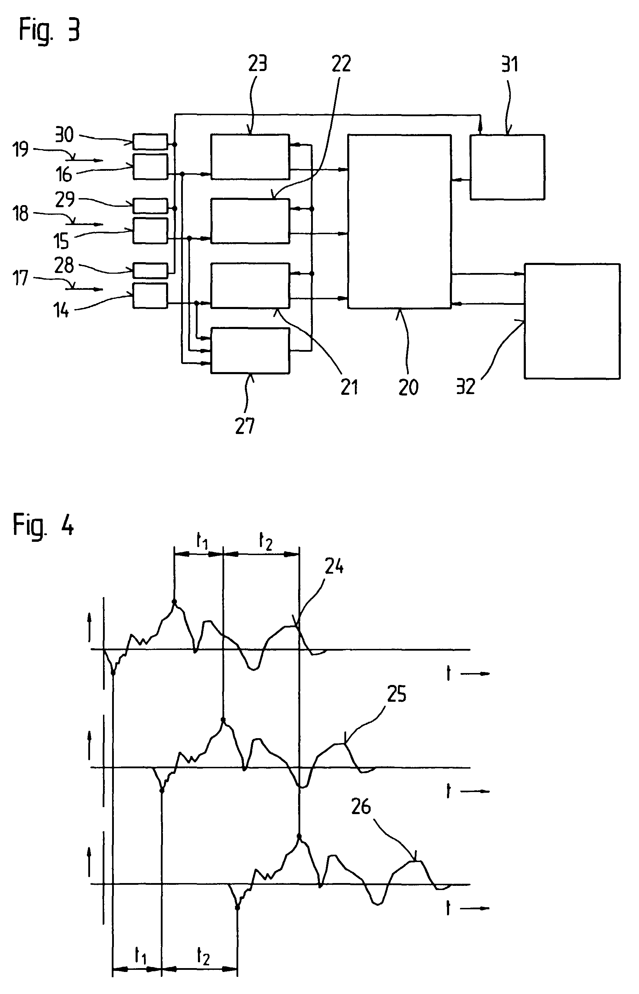

Die von den als Mehrquadrantensensoren in Form von Fotodioden ausgebildeten optischen Sensoren 14, 15 und 16, die bei einem Meßvorgang mittels einer Triggerschaltung 27 gestartet werden, aufgenommenen Lichtstrahlen 17, 18 und 19 werden in einem festen Zeitraster gemessen, in zugeordneten Analog/Digitalwandlern 21, 22 und 23 in Zahlenwerte umgewandelt und zur Auswertung einem Rechner 20 zugeleitet. Da die aufgenommenen Lichtstrahlen 17, 18 und 19 jeweils auf gleicher Höhe von dem Straßenfahrzeug 3 reflektiert werden, ergeben sich jeweils etwa die gleichen in Figur 4 dargestellten Lichtsignalmuser 24, 25 und 26, die jedoch, je nach Geschwindigkeit des Straßenfahrzeuges 3, um die Zeiteinheit t zeitversetzt zueinander sind. In Figur 4 sind für drei markante Ausbildungen der in Abhängigkeit von der Kontur des Fahrzeuges 3 aufgenommenen Lichtsignalmuster 24, 25 und 26 die Zeitdifferenzen t₁ bzw. t₂ eingezeichnet.

In dem Rechner 20 wird die Kongruenz zwischen den Lichtsignalmustern 24, 25 und 26 überprüft und mit Auswertkriterien verglichen. Sind Abweichungen nicht feststellbar, wird mit Hilfe des seitlichen Abstandes zwischen den optischen Sensoren 14, 15 und 16 als Wegstrecke sowie der durch den Versatz der zugeordneten Lichtsignalmuster ermittelten Zeit die Fahrgeschwindigkeit des Straßenfahrzeuges 3 bestimmt.

Um die Einrichtung 11 auch bei Dunkelheit einsetzen zu können, ist den optischen Sensoren 14, 15 und 16 jeweils eine Lichtquelle 28, 29 und 30, beispielsweise eine Infrarotlampe, zugeordnet. Mit Hilfe einer Steuereinheit 31 werden die Lichtquellen 28, 29 und 30 gespeist und geschaltet. Und um Beweisfotos zu erstellen, ist der Einrichtung 11 eine Fotoeinheit 32 zugeordnet.

## Patentansprüche

1. Einrichtung zur Ermittlung der Fahrgeschwindigkeit eines Straßenfahrzeuges mittels optischer Signale,
**dadurch gekennzeichnet**,
daß am Rand (2) einer Fahrstraße (1) zwei oder mehrere optische Sensoren (14, 15, 16) etwa parallel zum Fahrbahnbelag und mit seitlichem Abstand zueinander angeordnet sind,
daß die optischen Sensoren (14, 15, 16) als Mehrquadrantensensoren in Form von Fotodioden zur Aufnahme von von dem Straßenfahrzeug (3) reflektierten Lichtstrahlen (17, 18, 19) ausgebildet sind, und
daß die optischen Sensoren (14, 15, 16) jeweils über einen Analog/Digitalwandler (21, 22, 23) an einen Rechner (20) angeschlossen sind, in dem die von den optischen Sensoren (14, 15, 16) zeitlich versetzt aufgenommenen Lichtsignalmuster (24, 25, 26) auswertbar sind.

2. Einrichtung nach Anspruch 1,
**dadurch gekennzeichnet**,
daß die optischen Sensoren (14, 15, 16) zur Differenzbildung der Helligkeitssignale jeweils mit zwei unmittelbar nebeneinander oder vier im Kreis angeordneten lichtempfindlichen Dioden versehen sind.

3. Einrichtung nach Anspruch 1 oder 2,
**dadurch gekennzeichnet**,
daß den Analog/Digitalwandlern (21, 22, 23) eine Triggerschaltung (27) zugeordnet ist, mittels der die Einrichtung (11) einschaltbar ist.

4. Einrichtung nach einem oder mehreren der
Ansprüche 1 bis 3,
**dadurch gekennzeichnet**,
daß den optischen Sensoren (14, 15, 16) eine gemeinsame oder jeweils mindestens eine Lichtquelle (28, 29, 30), vorzugsweise eine Infrarotlampe, zugeordnet ist, die an eine Steuereinheit (31) angeschlossen sind.

5. Einrichtung nach einem oder mehreren der
Ansprüche 1 bis 4,
**dadurch gekennzeichnet**,
daß die optischen Sensoren (14, 15, 16) gemeinsam in einem ausrichtbaren Gehäuse (12) angeordnet sind.

6. Einrichtung nach einem oder mehreren der
Ansprüche 1 bis 5,
**dadurch gekennzeichnet**,
daß zur Erfassung der von dem Straßenfahrzeug (3) reflektierten Lichtstrahlen (17, 18, 19) drei optische Sensoren (14, 15, 16) vorgesehen sind, die mit gleichem seitlichem Abstand zueinander in dem Gehäuse (12) angeordnet sind.

7. Einrichtung nach einem oder mehreren der
Ansprüche 1 bis 6,
**dadurch gekennzeichnet**,
daß der Einrichtung (11) eine Fotoeinheit (32) zugeordnet ist.

8. Verfahren zur Ermittlung der Fahrgeschwindigkeit eines Straßenfahrzeuges mittels optischer Signale,
**dadurch gekennzeichnet**,
daß mittels zweier oder mehrerer, vorzugsweise dreier am Rand (2) einer Fahrstraße (1) angeordneter optischer Sensoren (14, 15, 16) von dem Straßenfahrzeug (3) auf etwa gleichem Niveau reflektierte natürliche oder künstliche Lichtstrahlen (17, 18, 19) in Form von Lichtsignalmustern 24, 25, 26) aufgenommen werden,
daß die Lichtsignalmuster (24, 25, 26) jeweils über einen Analog/Digitalwandler (21, 22, 23) einem Rechner (20) zugeleitet und in diesem auf Kongruenz abgeglichen werden und daß aus dem zeitlichen Versatz der Lichtsignalmuster (24, 25, 26) zueinander in dem Rechner (20) die Fahrgeschwindigkeit des Straßenfahrzeuges (3) ermittelt wird.

9. Einrichtung nach Anspruch 8,
**dadurch gekennzeichnet**,
daß die Helligkeitsunterschiede der von einem Straßenfahrzeug (3) reflektierten Lichtstrahlen (17, 18, 19) von den optischen Sensoren (14, 15, 16) detektiert werden.

10. Einrichtung nach Anspruch 8 oder 9,
**dadurch gekennzeichnet**,
daß die Einrichtung (11) mittels einer den Analog/Digitalwandlern (21, 22, 23) zugeordneter Triggerschaltung (27) eingeschaltet wird.

11. Einrichtung nach einem oder mehreren der
Ansprüche 8 bis 10,
**dadurch gekennzeichnet**,
daß die Lichtsignalmuster (24, 25, 26) in dem Rechner (20) mit vorgegebenen Auswertkriterien verglichen werden.
